Europäisches Patentamt

European Patent Office

Office européen des brevets

(11) Veröffentlichungsnummer: **0 046 460**
**B1**

# EUROPÄISCHE PATENTSCHRIFT

(45) Veröffentlichungstag der Patentschrift:
20.06.84

(51) Int. Cl.³: **B 29 D 3/02**

(21) Anmeldenummer: 80105026.1

(22) Anmeldetag: 23.08.80

(54) **Schwer entflammbare dekorative Schichtstoffplatte.**

(43) Veröffentlichungstag der Anmeldung:
03.03.82 Patentblatt 82/9

(45) Bekanntmachung des Hinweises auf die Patenterteilung:
20.06.84 Patentblatt 84/25

(84) Benannte Vertragsstaaten:
AT BE CH FR GB IT LI LU NL SE

(56) Entgegenhaltungen:
CH - A - 597 453
DE - A - 2 907 707
DE - B - 1 560 817

(73) Patentinhaber: HOECHST AKTIENGESELLSCHAFT,
Postfach 80 03 20, D-6230 Frankfurt am Main 80 (DE)

(72) Erfinder: Schuren, Gerardus Wilhelmus, Limburgstraat 6,
NL-6037 SM Kelpen (NL)
Erfinder: Hemels, Martinus, Margrietlaan 61,
NL-6006 ZW Weert (NL)

## Beschreibung

Die Erfindung bezieht sich auf eine Platte von der im Oberbegriff des Anspruchs 1 genannten Art und auf ein Verfahren zu ihrer Herstellung.

Zur Herstellung der bekannten, insbesondere dekorativen Schichtstoffplatten wird im allgemeinen zunächst Natronkraftpapier mit einem niedermolekularen Duroplastharz imprägniert und bei 120 bis 160°C getrocknet, wobei das Harz teilweise aushärtet. Eine Anzahl dieser vorbehandelten Papiere wird übereinandergestapelt; sie bilden den Kern der späteren dekorativen Schichtstoffplatte. Auf eine oder auf beide äusseren Papierlagen des Stapels werden gewöhnlich eine abdekkende und eine dekorative Papierschicht gelegt, die gewöhnlich ebenfalls in entsprechender Weise mit einem Duroplastharz vorbehandelt sind. Der Stapel wird bei einer Temperatur von 120 bis 180°C unter einem Druck von gewöhnlich 10 bis 100 bar in Stationär- oder Durchlaufpressvorrichtungen ausgehärtet. Während dieses Vorgangs fliessen die Harze und werden gehärtet, wodurch die einzelnen Lagen des Kerns und der Oberflächenschichten ein in sich geschlossenes, nicht schmelzbares, starres vernetztes Produkt bilden. Die erhaltene Schichtstoffplatte wird vor allem in der Möbelindustrie und im Bausektor verwendet.

Die obengenannte dekorative Papierschicht ist gewöhnlich ein pigmentiertes dekoratives Papierblatt, das mit einem Melamin/Formaldehyd-Harz imprägniert und anschliessend getrocknet wurde, wobei das Harz teilweise aushärtet.

Die bekannten Schichtstoffplatten sind aufgrund ihrer Entflammbarkeit und Brennbarkeit (Klasse B 2 nach DIN 4102) nur beschränkt verwendbar. Eine Verbesserung des Brennverhaltens lässt sich nur durch aufwendige Massnahmen erreichen wie zum Beispiel durch Zusatz von Flammschutzmitteln oder Verwendung spezieller Harze, wobei die mechanischen und dekorativen Eigenschaften der Schichtstoffplatte gegebenenfalls negativ beeinflusst werden können.

Es sind zwar Matten mit lockerer Struktur aus Mineralwolle bekannt, die unbrennbar sind und einen hohen Brandwiderstand aufweisen. Sie wurden bisher in der Bautechnik zur Wärmedämmung eingesetzt, wobei neben ihren Brandeigenschaften auch ihre schalldämmende Wirkung von Vorteil ist. Diese Mineralwolleprodukte besitzen aufgrund ihrer lockeren Struktur eine relativ niedrige Dichte von 40 bis 500 kg/m³ und nur geringe Steifigkeit und mechanische Festigkeit. Sie sind deshalb als Ersatz für die eingangs genannten üblichen Schichtstoffplatten auf Basis von Natronkraftpapier nicht geeignet. Insbesondere zeigen sie keine ausreichende Stoss- und Schlagbeanspruchbarkeit.

Eine solche schallisolierende Platte aus Steinwolle ist aus der CH-A Nr. 597453 bekanntgeworden. Sie zeigt eine Dicke grösser als 15 mm, vorzugsweise sogar mindestens 4 cm, und wird, ohne Zusatz von Harzen, auf eine Dichte von 70 bis 100 kg/m³ zusammengepresst. Ihre Vorderseite ist mit einem Glasfasergewebe überzogen, das angefärbt sein kann. Das Glasfasergewebe ist mit einer Leimzwischenlage auf die Mineralwolle aufgeklebt oder es befindet sich eine Glasfaserhaut zwischen Glasfasergewebe und Mineralwolle. Unter der Glasfaserhaut ist nach dieser Druckschrift eine Materialschicht zusammengepresster Glasfaserteilchen mit Harz zu verstehen.

Im Vergleich hierzu zeigt die aus gehärtetem Bindemittel und Mineralfasern bestehende Platte der DE-B Nr. 1560817 eine höhere Dichte und wird mit einem Raumgewicht von 500 kp/m³ und einem Bindemittelanteil von weniger als 4,5 Gew.-% als unbrennbar bezeichnet. Zur Herstellung einer Platte mit einem Raumgewicht von 1000 kp/m³ werden allerdings 10 Gew.-% Bindemittel verwendet, so dass dann das Brandverhalten wesentlich verschlechtert ist. Die Hauptfläche dieser Platte kann auch mit einem Papier beschichtet sein, jedoch erhält man auch dann noch keine dekorative Schichtstoffplatte, weil der poröse Plattenkern und auch der Verbund zwischen Papier und Plattenkern für diese Anwendung keine befriediegenden physikalischen Eigenschaften zeigt und auch das Brandverhalten dann unbefriedigend sein dürfte. Auch diese poröse Platte ist zur Wärme- und Schallisolierung vorgesehen und hat eine entsprechend grosse Dicke.

Es ist deshalb Aufgabe der Erfindung, eine Platte der eingangs genannten Art und ein Verfahren zu ihrer Herstellung vorzuschlagen, welche als dekorative Schichtstoffplatte praktisch unbrennbar ist und welche die an dekorative Schichtstoffplatten gestellten hohen Anforderungen bezüglich mechanischer und dekorativer Eigenschaften erfüllt. Sie muss insbesondere hohe Steifigkeit, mechanische Festigkeit und selbst unter extremen klimatischen Bedingungen Dimensionsstabilität und Witterungsbeständigkeit zeigen, auch gegenüber Stoss- und Schlagbeanspruchung ausreichend stabil sein und hohe Oberflächenhärte, Kratzfestigkeit und chemische Resistenz zeigen. Ferner soll sie bei extremer Hitzeeinwirkung (750°C/ 15 min) nicht, wie die üblichen Schichtstoffplatten auf Basis von Natronkraftpapier, explosionsartig unter Bildung von scharfkantigen Bruchstükken auseinanderspringen.

Diese Aufgabe wird gelöst durch eine Platte mit den im Anspruch 1 genannten Merkmalen. Die Ansprüche 2 bis 10 beschreiben bevorzugte Ausführungsformen. Gegenstand der Erfindung ist ferner das im Anspruch 11 genannte Verfahren. Die Ansprüche 12 bis 17 betreffen Weiterbildungen des Verfahren.

Überraschenderweise wurde somit gefunden, dass sich Mineralwolle aus Basis von Basalt- und/oder Diabasefasern bei hohem Druck und hoher Temperatur verdichten lässt, so dass eine dekorative Schichtstoffplatte mit einer Dichte von 1000 bis 1600 kg/m³ mit hoher mechanischer Festigkeit entsteht. An sich war anzunehmen, dass die geforderten mechanischen Eigenschaften nicht erreicht wurden, denn es war zu erwarten, dass die anorganischen Fasern beim Verpressen unter hohem Druck infolge der hierbei auftretenden hohen Schubspannungen zerbrechen müssten.

Die erhaltene dekorative Schichtstoffplatte zeigt im Gegensatz zu den bisherigen Mineralwollekörpern infolge ihrer hohen mechanischen Festigkeit und Steifigkeit freitragende Eigenschaften, die eine konstruktive Anwendung ermöglichen. Sie zeigt eine ausgezeichnete Oberflächenhärte und hält hoher mechanischer Beanspruchung stand. Ferner zeigt sie auch in extremem Klima gute Dimensionsstabilität.

Unter einer dekorativen Schichtstoffplatte ist ein flächenhafter Körper zu verstehen, dessen Oberflächenform dem Anwendungszweck angepasst und der zum Beispiel auch gebogene Form aufweisen kann. Insbesondere zeigt die Platte eine im wesentlichen ebene Fläche.

Die Kernschicht besteht aus einer oder mehreren Schichten aus Mineralfasern auf Basis von Basalt und/oder Diabase.

Unter Diabase sind alte basaltische, vulkanische Gesteine aus der Devon- oder Vordevonzeit zu verstehen, deren Olivine, Augite oder primäre braune Hornblenden sich allmählich zum Teil in grünliche Silicate (Chloride und grüne Hornblenden) umgewandelt haben und daher auch als Grünsteine bezeichnet werden. In ihrer chemischen Zusammensetzung variieren sie stark.

Die Mineralfasern der Erfindung werden aus dem geschmolzenen Gestein gewöhnlich durch Abschleudern oder Zerblasen in Form einer langfaserigen Wolle erhalten.

Diese mineralfaserhaltigen Schichten werden beispielsweise als Mineralwolle, insbesondere in Form von mattenartigen Gebilden, insbesondere aber als verfestigter Vliesstoff eingesetzt, wobei die Mineralfasern in dem Faserkörper in keiner bestimmten Vorzugsrichtung vorliegen. Sie werden bereits unmittelbar bei ihrer Herstellung, z.B. beim Abschleudern oder Zerblasen, mit dem Harz beschichtet, insbesondere durch Besprühen, und dann unter Bildung einer mattenartigen Mineralwolle in Wirrlage, z.B. auf dem Transportband, abgelegt. In einer Abwandlung werden die Fasern zunächst in loser Wirrlage abgelegt und/oder zu einer Vliesstoffschicht verfestigt und erst dann in loser, wolleartiger Form oder als Vliesstoff mit dem Harz, z.B. durch Besprühen, versehen. Vliesstoffe sind gegenüber der lockeren Struktur der Mineralwolle verdichtete Körper, die mechanisch vorverdichtet sind, z.B. durch Pressen oder Nadeln. Die erhaltene Vliesstoffschicht hat dann ein Flächengewicht von 30 bis 700 g/m². In allen Fällen liegen die Mineralfasern in keiner bestimmten Vorzugsrichtung vor. Der Harzgehalt liegt bei 2 bis 6 Gew.-%, bezogen auf die mit Harz beschichteten Fasern. Die gewünschte Stärke des Formteils hängt in erster Linie von der Menge der mit dem Harz zu verpressenden Fasern ab.

Das Harz, mit dem die Fasern beschichtet werden, ist zum Beispiel ein Phenol-Formaldehyd-Harz und/oder ein Aminoplastharz, wie Melamin/Formaldehyd-Harz, oder Harnstoff/Formaldehyd-Harz, oder ein vernetzbares Acryl-Harz oder eine Mischung oder Mischkondensationsharz. Besonders vorteilhaft wird ein Phenolharz, ein Harnstoffharz oder ein Melaminharz verwendet. Zur Oberflächenveredelung werden bei Verwendung von Melaminharzen in der Dekorschicht besonders gute Oberflächeneigenschaften des Formteils erzielt, insbesondere bezüglich seiner Kratzfestigkeit, Witterungsbeständigkeit, Lichtechtheit und chemischen Resistenz.

Bei Verwendung von Diabase wird beispielsweise kurz nach dem Zerblasen oder Abschleudern des geschmolzenen Gesteins auf die sich bildende Faser ein Phenol/Formaldehyd-Harz in der gewünschten Menge aufgesprüht. Die entstandene mit Harz beschichtete langfaserige grüne Wolle wird zunächst auf einem Transportband abgelegt. Durch anschliessende mechanische Verfestigung, insbesondere durch Vernadelung, erhält man eine festere, vorverdichtete Vliesstoffschicht mit einem Flächengewicht von 300 bis 700 g/m². Die Mineralfasern liegen in keiner bestimmten Vorzugsrichtung vor.

Die wärmehärtbares Harz enthaltenden mineralfaserhaltigen Schichten, die üblicherweise deckungsgleich übereinanderliegen, werden bei Temperaturen von beispielsweise etwa 120 bis 210 °C, vorteilhafterweise bei 120 bis 180°C, und bei einem Druck von etwa 20 bis 100 bar, vorteilhafterweise etwa 30 bis 70 bar, verpresst. Das Verpressen erfolgt beispielsweise in einer bekannten Stationär- oder Durchlaufpressvorrichtung. Die Zahl und die Dicke der faserhaltigen Schichten wird je nach Verwendung des erhaltenen Formteils gewählt, wobei man Endprodukte mit einer Dicke von etwa 0,3 bis 15 mm erhält. Das erhaltene Formteil hat eine Dichte von 1000 bis 1600 kg/m³.

Wird eine Vielzahl der Schichtpakete in der Presse übereinandergestapelt, was bei geringer Zahl bzw. geringer Dicke der mineralfaserhaltigen Schicht je Schichtpaket wirtschaftlich von Vorteil ist, so werden die einzelnen Schichtpakete durch jeweils ein Trennmedium voneinander getrennt. Das Trennmedium ist zum Beispiel eine Papierschicht und/oder eine Kunststoffolie als Strukturgeber. Auch Metallfolien oder -platten können hierzu verwendet werden.

Die mineralfaserhaltige Schicht bzw. das Schichtpaket weist als Oberflächenschicht eine bei dekorativen Schichtstoffplatten aus Natronkraftpapier übliche Dekorschicht aus Papier auf. Hierzu wird vor dem Pressvorgang auf die äussere Oberfläche des Kerns aus Mineralfasern die Dekorschicht aus Papier aufgelegt, die mit einem hitzehärtbaren Aminoplastharz, zum Beispiel mit einem Melaminharz, imprägniert ist. Besonders geeignet sind bedruckte und einfarbige Dekorpapiere mit einem Flächengewicht von 40 bis 160 g/m², vorzugsweise 60 bis 120 g/m², welche mit etwa 80 bis 140 Gew.-% Melamin/Formaldehyd-Harz imprägniert sind und eine Restfeuchte von 4 bis 7 Gew.-% aufweisen. Auf diese Weise entsteht eine dekorative Schichtstoffplatte mit einer höheren Steifigkeit (E-Modul), absoluter Unbrennbarkeit und ausgezeichneter Dimensionsstabilität. Bei einer Plattendicke zwischen 0,3 und 15 mm und einer Dichte von 1250 kg/m³ ist die

Biegefestigkeit 50-90N/mm² (DIN 53 799), die E-Modulwert 30-50 kN/mm² (DIN 53 457) und die Massbeständigkeit kleiner als 0,05% (DIN 53 799), jeweils in Quer- und Längsrichtung.

Zwischen dem Kern und der Dekorschicht wird ein Haftvermittler eingesetzt. Als Haftvermittler eignet sich besonders ein Glasfaservliesstoff mit einem Flächengewicht von etwa 20 bis 100 g/m², insbesondere 30 bis 50 g/m², welcher mit einem wärmehärtbaren Harz, beispielsweise mit etwa 50 bis 200 Gew.-% Harnstoff-, Melamin- oder Phenolharz, beschichtet ist.

Die Platte mit einer oder zwei dekorativen Oberflächen, niedrigem Harzgehalt und Haftvermittler, zeigt den Vorteil eines nur geringen Anteils an organischen Substanzen und ist deshalb äusserst hitzebeständig, nicht brennbar und nicht entflammbar, so dass die Klasse A 2 nach DIN 4102 ohne Zusatz eines Flammschutzmittels erreicht wird.

Durch die ausgezeichneten mechanischen, physikalischen und dekorativen Eigenschaften der völlig geschlossenen, insbesondere ein gehärtetes Melaminharz enthaltenden Dekorschicht in Kombination mit der Unbrennbarkeit des Formteils sind die gemäss der Erfindung hergestellten Produkte optimal geeignet zur Verwendung als selbsttragende oder zur Verkleidung dienende dekorative Schichtstoffplatte im Innen- und Aussenausbau, z.B. in Form einer unbrennbaren Fluchtwegverkleidung, Brüstung, Fassadenverkleidung und Deckenplatte.

Die Erfindung wird durch die nachfolgenden Beispiele 1 und 2 erläutert.

*Beispiel 1:*

Langfaserige grüne Wolle wird durch Abschleudern aus einer Diabase-Schmelze hergestellt und gleichzeitig mit Phenol/Formaldehyd-Harz besprüht. Der Harz-Gehalt beträgt dann 4 Gew.-%. Nach dem Trocknen bei etwa 70° C werden die beschichteten Fasern in Wirrlage auf einem Transportband abgelegt.

Durch Vernadelung der grünen Wolle mit zwei hintereinander angeordneten Nadelmaschinen entsteht eine verdichtete und verfestigte Vliesstoffschicht mit einem Flächengewicht von 500 g/m².

Ein rechteckiger Zuschnitt der Vliessstoffschicht aus grüner Wolle wird auf beiden Aussenflächen jeweils mit einem Vliesstoff aus Glasfasern, Flächengewicht 35 g/m², abgedeckt, welcher mit 150 Gew.-% Melamin/Formaldehyd-Harz beschichtet ist. Diese Glasfaserschichten dienen als Haftvermittler zwischen der Aussenfläche des Zuschnitts aus grüner Wolle und der nachfolgenden Schicht aus Dekorpapier, Flächengewicht 120 g/m², das mit 140 Gew.-% Melamin/Formaldehyd-Harz imprägniert ist.

Das Presspaket wird in eine Presse gebracht; es hat somit folgenden Aufbau:

Trennmedium: Kunststoffolie (gegebenenfalls mit Strukturgeber)

Oberfläche: Dekorpapier mit 140 Gew.-% Melamin/Formaldehyd-Harz
Haftvermittler: Glasfaservliesstoff mit 150 Gew.-% Melamin/Formaldehyd-Harz
Kern: Grüne Wolle mit 4 Gew.-% Phenol/Formaldehyd-Harz
Haftvermittler: Glasfaservliesstoff mit 150 Gew.-% Melamin/Formaldehyd-Harz
Oberfläche: Dekorpapier mit 140 Gew.-% Melamin/Formaldehyd-Harz
Trennmedium: Kunststoffolie (gegebenenfalls mit Strukturgeber).

Der Strukturgeber ist zum Beispiel eine Schichtstoffplatte oder Metallplatte mit entsprechenden Einprägungen in der Oberfläche.

Das Presspaket wird bei einer konstanten Temperatur von etwa 150° C und einem Druck von 50 bar 5 min lang gepresst. Die erhaltene Platte zeigt eine Dicke von 0,5 mm und eine Dichte von 1270 kg/m³. Sie ist unbrennbar und entspricht in ihrem Brennverhalten der Klasse A 2 nach DIN 4102. Bei einer 15minütigen Hitzebelastung von 750° C entsteht kein Feuer und es bilden sich keine Rauchgase oder brennbaren Gase.

*Beispiel 2:*

35 rechteckige Zuschnitte der grünen Wolle gemäss Beispiel 1 werden deckungsgleich übereinandergelegt. Die beiden Aussenflächen des Stapels werden jeweils mit Haftvermittler, Dekorschicht und Trennmedium abgedeckt. Das erhaltene Schichtpaket wird bei einer maximalen Kerntemperatur von etwa 150° C und einem Druck von etwa 50 bar 2 min lang verpresst. Nach Abkühlen auf etwa 80° C wird der Druck aufgehoben. Die erhaltene Platte zeigt eine Dicke von 12 mm und eine Dichte von 1250 kg/m³. Sie ist unbrennbar und entspricht in ihrem Brennverhalten der Klasse A 2 nach DIN 4102. Bei einer 15minütigen Hitzebelastung von 750° C entsteht kein Feuer und es bilden sich keine Rauchgase oder brennbaren Gase. Die Erhöhung der Ofentemperatur während des Tests beträgt ca. 16° C.

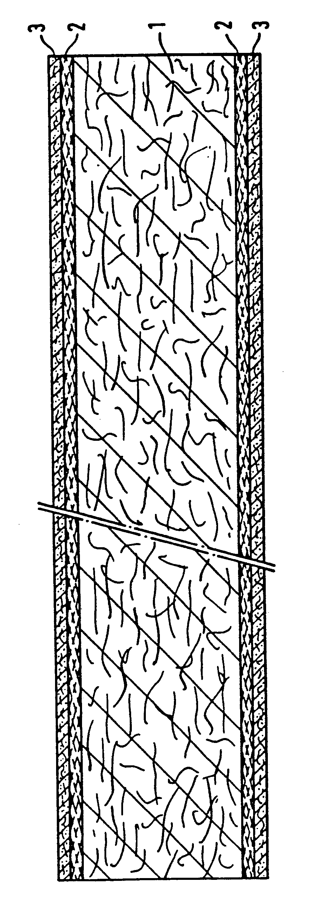

Die einzige Figur zeigt in Seitenansicht und im Schnitt eine bevorzugte Ausführungsform einer dekorativen Schichtstoffplatte, bestehend aus einem mineralfaserhaltigen Kern 1, zwei daran anschliessenden haftvermittelnden Glasfaserschichten 2 und zwei äusseren dekorativen Papierschichten 3.

**Patentansprüche**

1. Schwer entflammbare Platte, umfassend einen Kern aus wenigstens einer ein ausgehärtetes Kunstharz enthaltenden, verpressten mineralfaserhaltigen Schicht und einer äusseren Schicht auf Papierbasis auf wenigstens einer Oberfläche, dadurch gekennzeichnet, dass sie als dekorative Schichtstoffplatte eine Dicke von 0,3 bis 15 mm aufweist und ihre äussere Schicht aus einem Dekorpapier besteht, das ein gehärtetes Aminoplastharz enthält, dass der Kern Mineralfasern auf Basis von Basalt und/oder Diabase sowie 2 bis 6 Gew.-% Kunstharz, bezogen auf die Fasern, enthält, dass sich zwischen Kern und Dekorpapier eine haftvermittelnde Schicht befindet und die Platte eine Dichte von 1000 bis 1600 kg/m³ besitzt sowie praktisch unbrennbar ist (750°C, 15 min).

2. Platte nach Anspruch 1, dadurch gekennzeichnet, dass die mineralfaserhaltige Schicht aus mechanisch verfestigtem Vliesstoff mit einem Flächengewicht von 300 bis 700 g/m² besteht.

3. Platte nach einem der beiden Ansprüche 1 oder 2, dadurch gekennzeichnet, dass die mineralfaserhaltige Schicht aus wirr abgelegten Mineralfasern besteht.

4. Platte nach einem der Ansprüche 1 bis 3, dadurch gekennzeichnet, dass die mineralfaserhaltige Schicht aus grüner Wolle auf Basis von Diabase besteht.

5. Platte nach einem der Ansprüche 1 bis 4, dadurch gekennzeichnet, dass der Kern als ausgehärtetes Kunstharz Aminoplatz- und/oder Phenol- und/oder Expoxid- und/oder vernetzbares Acrylharz enthält.

6. Platte nach einem der Ansprüche 1 bis 5, dadurch gekennzeichnet, dass die äussere Schicht aus Dekorpapier 80 bis 140 Gew.-% Aminoplastharz, insbesondere Melamin/Formaldehyd-Harz, enthält.

7. Platte nach einem der Ansprüche 1 bis 6, dadurch gekennzeichnet, dass das Dekorpapier ein Flächengewicht von 40 bis 160, insbesondere 60 bis 120 g/m², besitzt.

8. Platte nach einem der Ansprüche 1 bis 7, dadurch gekennzeichnet, dass die haftvermittelnde Schicht ein Faservliesstoff, insbesondere aus Glasfasern, ist.

9. Platte nach Anspruch 8, dadurch gekennzeichnet, dass die haftvermittelnde Schicht 50 bis 200 Gew.-% eines oder mehrerer hitzehärtbarer, in der Hitze und unter Druck ausgehärteter Aminoplast- und/oder Phenolharze enthält.

10. Platte nach einem der beiden Ansprüche 8 oder 9, dadurch gekennzeichnet, dass ein Glasfaservliesstoff als Haftvermittler vorhanden ist, der ein Flächengewicht von 20 bis 100, insbesondere 30 bis 50 g/m², besitzt.

11. Verfahren zur Herstellung einer Platte nach Anspruch 1, wobei man wenigstens eine mineralfaserhaltige Schicht als Kernschicht, deren Fasern mit einem wärmehärtbaren Harz beschichtet und mechanisch vorverdichtet sind, und ein Papier auf einer oder auf beiden Oberflächen der Kernschicht verpresst und das Harz aushärtet, dadurch gekennzeichnet, dass die faserhaltige Kernschicht einen Harzgehalt von 2 bis 6 Gew.-%, bezogen auf die Fasern, aufweist und aus Mineralfasern auf Basis von Basalt und/oder Diabase besteht, dass das Papier ein Dekorpapier mit einem Flächengewicht von 40 bis 160 g/m² ist, welches 80 bis 140 Gew.-% Aminoplastharz enthält, dass sich zwischen Kernschicht und Dekorpapier eine haftvermittelnde Schicht befindet und dass man die übereinanderliegenden Schichten bei einem Druck von 20 bis 100, insbesondere 30 bis 70 bar, und bei einer Temperatur im Bereich von 120 bis 210, insbesondere 120 bis 180°C, verpresst und die Harze aushärtet.

12. Verfahren nach Anspruch 11, dadurch gekennzeichnet, dass der Harzgehalt in der Kernschicht kleiner als 4 Gew.-% ist.

13. Verfahren nach einem der beiden Ansprüche 11 oder 12, dadurch gekennzeichnet, dass das Dekorpapier ein Flächengewicht von 60 bis 120 g/m² und eine Restfeuchte von 4 bis 7 Gew.-% besitzt.

14. Verfahren nach einem der Ansprüche 11 bis 13, dadurch gekennzeichnet, dass die Fasern der Kernschicht mit einem hitzehärtbaren Kunstharz auf Basis von Aminoplast- und/oder Phenol- und/oder Epoxid- und/oder vernetzbarem Acrylharz beschichtet sind.

15. Verfahren nach einem der Ansprüche 11 bis 14, dadurch gekennzeichnet, dass die haftvermittelnde Schicht ein Faservliesstoff, insbesondere aus Glasfasern, ist.

16. Verfahren nach einem der Ansprüche 11 bis 15, dadurch gekennzeichnet, dass die haftvermittelnde Schicht 50 bis 200 Gew.-% hitzehärtbares Aminoplast- und/oder Phenolharz enthält.

17. Verfahren nach einem der beiden Ansprüche 15 oder 16, dadurch gekennzeichnet, dass ein Glasfaservliesstoff als Haftvermittler vorhanden ist, der ein Flächengewicht von 20 bis 100, insbesondere 30 bis 50 g/m², besitzt.

## Claims

1. Difficultly inflammable panel, comprised of a core of at least one compressed, mineral fiber-containing layer containing a hardened synthetic resin and an outer layer on a basis of paper on at least one surface thereof, characterized in that it is a decorative laminate panel of a thickness of 0.3 to 15 mm, the outer layer of which is a decorative paper which contains a hardened aminoplast resin, that the core contains mineral fibers on a basis of basalt and/or diabase and 2 to 6 percent by weight of a synthetic resin, relative to the fibers, that an adhesion-promoting layer is provided between the core and the decorative paper and that the panel has a density of 1,000 to 1,600 kg/m³ and is practically non-combustible (750°C, 15 min).

2. Panel as claimed in Claim 1, wherein the mineral fiber-containing layer is comprised of a mechanically compressed non-woven having a weight per unit area of 300 to 700 g/m².

3. Panel as claimed in Claim 1 or 2, wherein the mineral fiber-containing layer is comprised of mineral fibers which are deposited in a tangled fashion.

4. Panel as claimed in any of Claims 1 to 3, wherein the mineral fiber-containing layer is comprised of mineral wool on a basis of diabase.

5. Panel as claimed in any of Claims 1 to 4, wherein the synthetic resin contained in the core is an aminoplast resin and/or phenolic resin and/or epoxide resin and/or cross-linkable acrylic resin.

6. Panel as claimed in any of Claims 1 to 5, wherein the outer layer of decorative paper contains 80 to 140 percent by weight of aminoplast resin, in particular melamine/formaldehyde resin.

7. Panel as claimed in any of Claims 1 to 6, wherein the decorative paper has a weight per unit area of 40 to 160, in particular 60 to 120 g/m².

8. Panel as claimed in any of Claims 1 to 7, wherein the adhesion-promoting layer is comprised of a fiber non-woven, in particular of glass fibers.

9. Panel as claimed in Claim 8, wherein the adhesion-promoting layer contains 50 to 200 percent by weight of one or several thermosetting aminoplast resins and/or phenolic resins, which are cured by the action of heat and pressure.

10. Panel as claimed in Claim 8 or 9, wherein a glass fiber non-woven having a weight per unit area of 20 to 100, in particular of 30 to 50 g/m², is used as the adhesion promotor.

11. Process for the production of a panel as claimed in Claim 1, in which at least one mineral fiber-containing core layer, the fibers of which are coated with a thermosetting resin and mechanically pre-compressed, and a paper layer on one or the two surfaces of the core layer are compressed and the resin is hardened, characterized in that the fiber-containing core layer has a fiber content of 2 to 6 percent by weight, relative to the fibers, and is comprised of mineral fibers on a basis of basalt and/or diabase, that the paper is a decorative paper which has a weight per unit area of 40 to 160 g/m² and contains 80 to 140 percent by weight of an aminoplast resin, that an adhesion-promoting layer is provided between the core layer and the decorative paper, and that the superposed layers are compressed and the resins are cured at a pressure of 20 to 100, in particular of 30 to 70 bar, and at a temperature within a range of 120 to 210, in particular of 120 to 180°C.

12. Process as claimed in Claim 11, wherein the resin content of the core layer is less than 4 percent by weight.

13. Process as claimed in Claim 11 or 12, wherein the decorative paper has a weight per unit area of 60 to 120 g/m² and a residual moisture content of 4 to 7 percent by weight.

14. Process as claimed in any of Claims 11 to 13, wherein the fibers of the core layer are coated with a thermosetting resin on a basis of an aminoplast resin and/or phenolic resin and/or epoxide resin and/or cross-linkable acrylic resin.

15. Process as claimed in any of Claims 11 to 14, wherein the adhesion-promoting layer is a fiber non-woven, in particular of glass fibers.

16. Process as claimed in any of Claims 11 to 15, wherein the adhesion-promoting layer contains 50 to 200 percent by weight of a thermosetting aminoplast resin and/or phenolic resin.

17. Process as claimed in Claim 15 to 16, wherein the adhesion-promotor used is a glass fiber non-woven which has a weight per unit area of 20 to 100, in particular of 30 to 50 g/m².

**Revendications**

1. Panneau difficilement inflammable comportant un cœur d'au moins une couche comprimée contenant des fibres minérales et une résine synthétique durcie, et une couche externe à base de papier sur au moins une face, caractérisé
— en ce qu'il présente, comme panneau de matériau stratifié décoratif, une épaisseur de 0,3 à 15 mm et que sa couche externe est constituée d'un papier de décor contenant une résine aminoplaste durcie,
— en ce que le cœur contient des fibres minérales à base de basalte et/ou de diabase, ainsi que 2 à 6% en poids de résine synthétique, par rapport aux fibres,
— en ce qu'entre le cœur et le papier de décor se trouve une couche intermédiaire d'adhérence, et
— en ce que le panneau a une densité de 1000 à 1600 kg/m³ et est pratiquement incombustible (à 750°C, pendant 15 min).

2. Panneau selon la revendication 1, caractérisé en ce que la couche contenant des fibres minérales est constituée d'une matière en nappe consolidée mécaniquement et ayant un poids de 300 à 700 g/m³.

3. Panneau selon l'une des revendications 1 ou 2, caractérisé en ce que la couche contenant des fibres minérales est constituée de fibres minérales déposées à l'état enchevêtré.

4. Panneau selon l'une des revendications 1 à 3, caractérisé en ce que la couche contenant des fibres minérales est constituée de laine minérale à base de diabase.

5. Panneau selon l'une des revendications 1 à 4, caractérisé en ce que le cœur contient, comme résine synthétique durcie, une résine aminoplaste et/ou une résine phénolique et/ou une résine époxyde et/ou une résine acrylique réticulable.

6. Panneau selon l'une des revendications 1 à 5, caractérisé en ce que la couche externe de papier de décor contient de 80 à 140% en poids de résine aminoplaste, en particulier de résine mélamine/formaldéhyde.

7. Panneau selon l'une des revendications 1 à 6, caractérisé en ce que le papier de décor a un poids de 40 à 160, en particulier de 60 à 120 g/m².

8. Panneau selon l'une des revendications 1 à 7, caractérisé en ce que la couche intermédiaire d'adhérence est une nappe de fibres, en particulier de fibres de verre.

9. Panneau selon la revendication 8, caractérisé en ce que la couche intermédiaire d'adhérence contient 50 à 200% en poids d'une ou de plusieurs résines aminoplastes et/ou phénoliques thermodurcissables, durcies à chaud et sous pression.

10. Panneau selon l'une des revendications 8 ou 9, caractérisé en ce que l'intermédiaire d'adhérence est une nappe de fibres de verre qui a un poids de 20 à 100, en particulier de 30 à 50 g/m².

11. Procédé de fabrication d'un panneau selon la revendication 1, consistant à comprimer, comme couche de cœur, au moins une couche contenant des fibres minérales, dont les fibres sont enduites d'une résine thermodurcissable et prédensifiées mécaniquement et une feuille de papier sur une des faces ou sur les deux faces de la couche de cœur, et à durcir la résine, caractérisé

— en ce que la couche de cœur contenant des fibres a une teneur en résine de 2 à 6% en poids par rapport aux fibres et est constituée de fibres minérales à base de basalte et/ou de diabase,

— en ce que le papier est un papier de décor ayant un poids de 40 à 160 g/m², et qui contient 80 à 140% en poids de résine aminoplaste,

— en ce qu'entre la couche de cœur et le papier de décor se trouve une couche intermédiaire d'adhérence, et

— en ce que l'on comprime les couches superposées et que l'on durcit les résines sous une pression de 20 à 100, de préférence de 30 à 70 bar, et à une température comprise entre 120 et 210, en particulier entre 120 et 180° C.

12. Procédé selon la revendication 11, caractérisé en ce que la teneur en résine de la couche de cœur est inférieure à 4% en poids.

13. Procédé selon l'une des revendications 11 ou 12, caractérisé en ce que le papier de décor a un poids de 60 à 120 g/m² et une humidité résiduelle de 4 à 7% en poids.

14. Procédé selon l'une des revendications 11 à 13, caractérisé en ce que les fibres de la couche de cœur sont enduites d'une résine synthétique thermodurcissable à base de résine aminoplaste et/ou de résine phénolique et/ou de résine époxyde et/ou de résine acrylique réticulable.

15. Procédé selon l'une des revendications 11 à 14, caractérisé en ce que la couche intermédiaire d'adhérence est une nappe de fibres, en particulier de fibres de verre.

16. Procédé selon l'une des revendications 11 à 14, caractérisé en ce que la couche intermédiaire d'adhérence contient 50 à 200% en poids d'une résine aminoplaste et/ou d'une résine phénolique thermodurcissable.

17. Procédé selon l'une des revendications 15 ou 16, caractérisé en ce que l'intermédiaire d'adhérence est une nappe de fibres de verre qui a un poids de 20 à 100, en particulier de 30 à 50 g/m².